# EUROPÄISCHE PATENTSCHRIFT

(11) **EP 0 612 639 B1**
(45) Veröffentlichungstag und Bekanntmachung des Hinweises auf die Patenterteilung: **18.12.1996**
(21) Anmeldenummer: 94101018.3
(22) Anmeldetag: 25.01.1994
(51) Int. Cl.: B60K 15/04, B65D 51/00

(54) **Verschluss für einen Einfüllstutzen eines Kraftstofftankes**
Inlet cap for the filter pipe of a fuel tank
Bouchon pour la canalisation de remplissage du réservoir de carburant

(30) Priorität: 22.02.1993 DE 4305394
(43) Veröffentlichungstag der Anmeldung: 31.08.1994
(73) Patentinhaber: MERCEDES-BENZ AG, 70327 Stuttgart (DE)
(72) Erfinder: Kempka, Karl-Heinz, Dipl.-Ing., D-73730 Esslingen (DE); Kreckel, Uwe, Dipl.-Ing., D-72669 Unterensingen (DE); Meister, Oliver, Dipl.-Ing., D-70329 Stuttgart (DE)

(56) Entgegenhaltungen:
- EP-A- 0 265 829
- EP-A- 0 498 070
- US-A- 5 145 081

## Beschreibung

Die Erfindung betrifft einen Verschluß für einen Einfüllstutzen gemäß der Oberbegriffe der Patentansprüche 1 und 2.

Ein Verschluß der gattungsgemäßen Bauart ist aus der EP 0 498 070 A1 bekannt. Dort ist ein Verschluß eines Einfüllstutzens für eine Ölwanne beschrieben. Der bekannte Verschluß eine Durchlaßöffnung in der Schließplatte auf, die in Öffnungsstellung der Platte mit den Durchlaßöffnungen des Verschlußober- und -unterteils fluchtet. Dabei wird die Schließplatte innerhalb des Verschlusses zur Öffnung geschwenkt und liegt in Öffnungsstellung am Innenumfang an. Durch die Anordnung des Mitnahmeelementes des Verschlusses, das bezüglich des Durchlasses annähernd diametral der Schwenkachse des Verschlusses gegenüberliegt, ergeben sich relativ große auszuführende Drehwinkel für das Oberteil des Verschlusses, um die Öffnung freizugeben bzw. zu schließen. Kleine Drehwinkel sind jedoch Voraussetzung, um eine roboterfähige Betankung zu realisieren, da der Betankungsroboter aufgrund des in ihn eingespannten Füllschlauches und dessen stark begrenzten Torsionsfähigkeit nur sehr eingeschränkte Drehbewegungen ausführen kann.

Der Erfindung liegt die Aufgabe zugrunde, einen gattungsgemäßen Verschluß dahingehend weiterzubilden, daß eine dauerhafte und zuverlässige Schließfunktion des Verschlußdeckels gewährleistet und eine Betankung mittels einer robotergeführten Zapfpistole ermöglicht wird.

Die Aufgabe ist erfindungsgemäß jeweils durch die kennzeichnenden Merkmale der nebengeordneten Patentansprüche 1 und 2 gelöst.

Dank des sowohl in Öffnungs- als auch in Schließrichtung wirkenden zwangsweisen Antriebes des Verschlußdeckels kann die auf das Schwenken des Verschlußdeckels ausgeübte Kraft einen gegen die Schwenkbewegung aufgebrachten Widerstand in jedem Fall übersteigen, der z.B. von in der Mechanik festgesetzten Schmutzpartikeln bewirkt werden kann, so daß trotzdem jede Schwenkstellung eingenommen werden kann. Somit wird durch die Erfindung eine dauerhafte und zuverlässige Schließfunktion des Verschlußdeckels erreicht. Das Mitnahmelement ist derart angeordnet, daß zwischen ihm und dem zentralen Duchlaß des Einfüllstutzens die Schwenkachse liegt. Das Mitnahmeelement sowie der zu diesem ortsnahe bzw. ortsgleiche Hebelarm, über den die Schwenkbewegung eingeleitet wird, befinden sich dabei in unmittelbarer Nähe der Schwenkachse, so daß mit einer geringen Drehbetätigung des Verschlußoberteiles eine großwinklige Verschwenkung des Verschlußdeckels erfolgt. Hierzu liegt das über die robotergeführte Zapfpistole zu verdrehende Gegenformschlußelement des Mitnahmelementes aufgrund seiner Anordnung stets nahe der Schwenkachse, so daß nur kleine Auslenkungen erforderlich sind, um den Verschluß zu öffnen oder zu verschließen. Der Öffnungswinkel muß wegen der begrenzten Verdrillbarkeit der Kraftstoffschlauchleitungen möglichst klein sein, d.h. kleiner als 20°. Dies ist der Erfindung nach durch die große Übersetzung möglich, die sich aus der Position des im Bereich des kurzen Hebelarmes am Verschlußdeckel angreifenden Betätigungselementes ergibt. Beim bekannten Verschluß ist demgegenüber ein Öffnungswinkel von ca. 75°, also etwa dem 4-fachen des in der Erfindung größtmöglichen Öffnungswinkels, erforderlich. Durch die Erfindung wird somit eine robotergeführte Betankung ermöglicht.

Zweckmäßige Ausgestaltungen der Erfindung können den Unteransprüchen entnommen werden; im übrigen ist die Erfindung anhand mehrerer in den Zeichnungen dargestellter Ausführungsbeispiele nachfolgend noch erläutert; dabei zeigen:
Fig. 1 in einer Schnittdarstellung den erfindungsgemäßen Verschluß mit einem entgegen der Bewegungsrichtung einer robotergeführten Zapfpistole schwenkbaren Verschlußdeckel in Schließstellung und entriegeltem Zustand,
Fig. 2 in einer Draufsicht einen Abschnitt eines Verstellringes für den Verschlußdeckel aus Fig. 1,
Fig. 3 in einer Schnittdarstellung den erfindungsgemäßen Verschluß in Schließstellung mit einem um eine zur Einfüllstutzenachse parallele Achse schwenkbaren Verschlußdeckel mit Anhebevorrichtung und eine an den Einfüllstutzen angekoppelte Zapfpistole,
Fig. 4 in einer Schnittdarstellung des Verschlusses entlang der Linie IV-IV aus Fig. 3 in Schließ- und Offenstellung,
Fig. 5 in einer Schnittdarstellung den erfindungsgemäßen Verschluß in Schließstellung mit einem um eine zur Einfüllstutzenachse parallele Achse schwenkbaren, zur Öffnung entlastbaren Verschlußdeckel,
Fig. 6 in einer Schnittdarstellung den Verschluß aus Fig. 5 in Offenstellung mit in den Einfüllstutzen füllbereit eingeführtem Füllrohr einer Zapfpistole,
Fig. 7 eine Schnittdarstellung des Verschlusses entlang der Linie VII-VII aus Fig. 5 in Schließ- und Offenstellung.

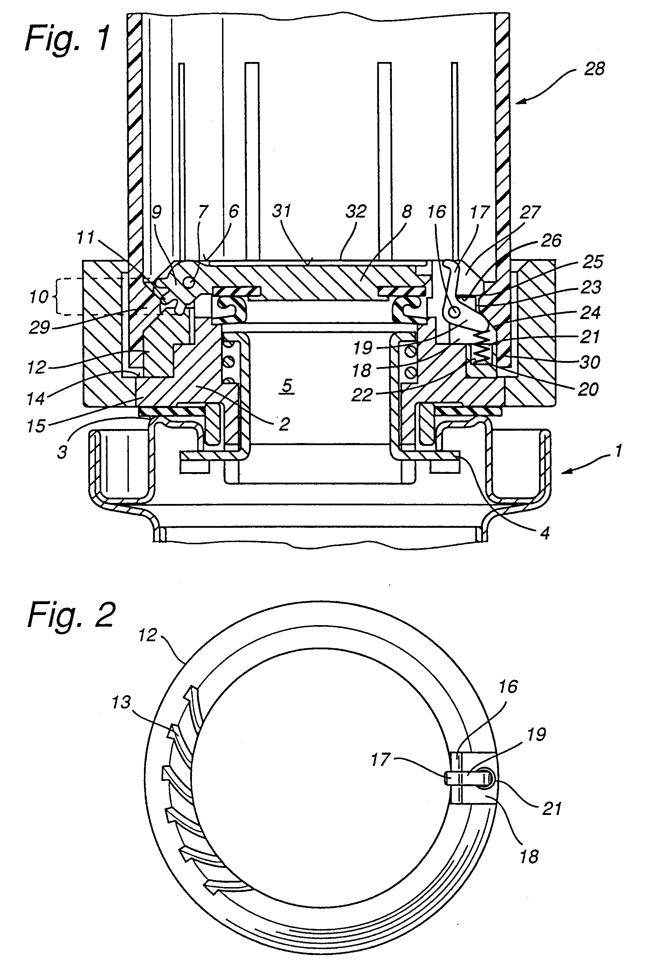

Wie aus Fig. 1 ersichtlich, ist einem Einfüllstutzen 1 eines Kraftstofftankes einfüllseitig ein Trägerteil 2 zugehörig, das unterseitig an einer umlaufenden Kante 3 des Stutzens 1 dichtend anliegt und mittels eines Bajonettverschlusses 4 mit diesem lösbar verbunden ist.

Das Trägerteil 2 weist einen zentralen Durchlaß 5 für die Kraftstoffbetankung auf und besitzt an seiner Oberseite 6 einen dort auf einer Schwenkachse 7 schwenkbar gelagerten Verschlußdeckel 8.

Jenseits der Schwenkachse 7 ist am Verschlußdeckel 8 ein Hebelarm 9 angeordnet, der an seinem Umfang ein Zahnsegment 10 besitzt. Das Zahnsegment 10 steht mit seinen Zähnen 11 im Eingriff mit einer an der Oberseite eines Verstellringes 12 in einem Teilbereich ausgebildeten Spiralverzahnung 13 (Fig. 2).

Das Trägerteil 2 trägt an der axialen Stirnseite 14 einer Schulter 15 den Verstellring 12, der axial zugänglich ist und koaxial zum Trägerteil 2 angeordnet und drehbar auf diesem gelagert ist.

Diametral dem Verzahnungsbereich gegenüberliegend ist beim dargestellten Ausführungsbeispiel am Verstellring 12 eine Sperrklinke 17 zur Ver- und Entriegelung des Verschlußdeckels 8 in einer Schwenklagerung 16 befestigt, wobei im Verstellring 12 eine radiale Ausnehmung 18 zur freien Schwenkbarkeit der Sperrklinke 17 vorgesehen ist.

Die Sperrklinke 17 weist einen sich nach außen erstreckenden Hebelarm 19 auf, der zum mechanischen Lüften der Sperrklinke 17 entgegen einer die Sperrklinke 17 im Schließsinne vorspannende Federkraft betätigbar ist. Die als Schraubendruckfeder gestaltete Feder 20 ist in einer am Verstellring 12 ausgebildeten zum darüberliegenden Hebelarm 19 der Sperrklinke 17 hin offenen axialen Aussparung 21 aufgenommen und stützt sich am Hebelarm 19 einerseits und am Grund 22 der Aussparung 21 andererseits ab.

Desweiteren ist am Umfang des Trägerteils 2 eine im Querschnitt trapezförmige und sich radial nach außen öffnende als Rastnut für einen Füllkopf dienende Umfangsnut 23 vorgesehen, deren dem Tank näher gelegene untere Flanke 24 durch eine abgeschrägte Schulter am Verstellring 12 und deren gegenüberliegende obere Flanke 25 von der Unterseite 26 eines oberseitig am Trägerteil 2 ausgebildeten Bundes 27 gebildet ist.

Die Lagerung der Sperrklinke 17 am Verstellring 12 erfordert eine große Aussparung des Trägerteils 2, da sich die Klinke 17 ja mit dem Verstellring 12 mitdreht, wobei von einer Drehung von 45° auszugehen ist. Alternativ zur oben beschriebenen Lagerung der Sperrklinke kann diese auch direkt auf dem Trägerteil 2 gelagert sein. Dabei bedarf es allerdings einer Aussparung am Verstellring für die Sperrklinke zur Gewährleistung der freien Schwenkbarkeit des Verstellringes. Unter Umständen kann dabei der Verstellring im Aussparungsbereich mit einem reduzierten Querschnitt ausgebildet werden, so daß auf eine vollständige Aussparung des Ringes verzichtet werden kann. Es ist weiterhin denkbar, daß sich an einem derartig gestalteten Verstellring eine Feder abstützt, die diesen in Schließstellung drückt, wodurch der Schließvorgang des Deckels unterstützt wird.

Zur Betankung wird nun eine robotergeführte Zapfpistole 28 an den Einfüllstutzen 1 axial herangeführt. Diese weist beim dargestellten Ausführungsbeispiel endseitig einen Kranz von axialen elastischen Zungen auf, die innen jeweils eine Kralle 29 entsprechend dem Querschnitt der erwähnten Rastnut auf, an die sich axial jeweils ein Segment eines Zentrierbundes 30 anschließt. Der Zentrierbund 30 wird beim Ankoppeln der Zapfpistole 28 an den Einfüllstutzen 1 auf den Verstellring 12 gesteckt. Die Krallen 29 rasten dabei in die Umfangsnut 23 ein und bewirken dabei mit dem Zentrierbund 30 einen festen spielfreien und somit sicheren Sitz der Zapfpistole 28 am Einfüllstutzen 1; zugleich wird die Zapfpistole 28 exakt koaxial zum Einfüllstutzen 1 ohne die Gefahr eines Verkantens ausgerichtet.

Während des Einrastens in die Umfangsnut 23 drückt eine Kralle 29 entgegen der Schließkraft der Feder 20 den Hebelarm 19 der Sperrklinke 17 herunter, wodurch die Sperrklinke 17 in einer Schwenkbewegung vom Verschlußdeckel 8 gelüftet wird und diesen dadurch entriegelt.

Durch Andrücken und Drehen des Füllkopfes der Zapfpistole 28 wird der Verstellring 12 infolge des Abstützens der Krallen 29 an seiner abgeschrägten Schulter gleichsinnig verdreht, wobei aufgrund des Eingriffs der Spiralverzahnung 13 am Verstellring 12 mit dem am Verschlußdeckel 8 angeordneten Zahnsegment 10 der Deckel um die Schwenkachse 7 aus der Schließstellung in eine Öffnungsstellung verschwenkt wird.

Das Schließen des Deckels 8 nach der Betankung erfolgt in umgekehrter Reihenfolge wie beim Öffnen. Nach Erreichen der Schließstellung wird die Zapfpistole 28 vom Füllstutzen 1 abgekoppelt, wobei die Krallen 29 aus der Umfangsnut ausrasten. Aufgrund der nun fehlenden Gegenkraft drückt die Feder 20 den Hebelarm 19 der Sperrklinke 17 so weit hoch, bis diese am Verschlußdeckel 8 einklinkt und damit diesen verriegelt.

Zum manuellen Öffnen des Verschlußdeckels 8 kann an dessen Oberseite 31 ein Greifring 32 vorgesehen sein, mit dem der Dekkel 8 aufgezogen werden kann. Nach Betankung kann der Deckel in einfacher Weise in seine Schließstellung gedruckt werden. Für eine problemlose Betätigung des Verschlußdeckels 8 ist es dabei die Spiralverzahnung 13 am Verstellring 12 und die Gegenverzahnung am Hebelarm 9 des Verschlußdeckels 8 hinsichtlich der Steilheit der Spiralkontur derart auszubilden, daß eine Selbsthemmung des darin gebildeten Getriebes weder in der einen noch in der anderen Kraftflußrichtung eintritt.

Alternativ kann jedoch zum manuellen Betanken in einfacher Weise auch der gesamte Verschlußkomplex mit Trägerteil, Verstellring und Verschlußdeckel wie ein herkömmlicher Tankverschluß vom Einfüllstutzen abgeschraubt werden. Dadurch wird die Ankopplung von Zapfpistolen mit Gummimanschetten zur Gasrückführung aufgrund des nun zur Verfügung stehenden großen Querschnittes des Einfüllstutzens vereinfacht.

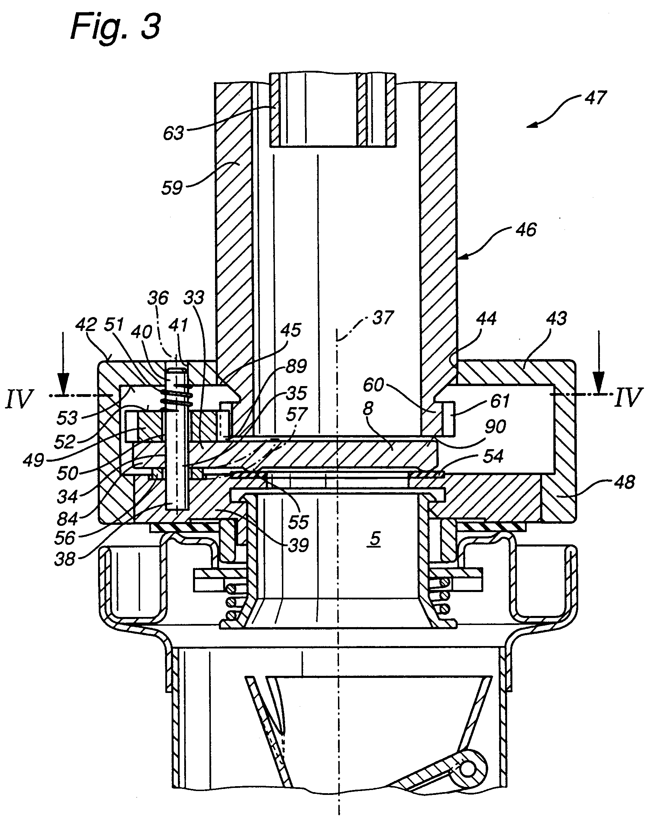

Eine Alternative zum oben beschriebenen Ausführungsbeispiel stellt Fig. 3 dar. Dabei weist der kreisrunde in Schließstellung befindliche Verschlußdeckel 8 am Umfang einen seitlich abstehenden Stiel 33 auf, der derart ausgebildet ist, daß die Kontur des Deckels 8 mit Stiel 33 birnenförmig ist.

Der Deckel 8 ist mit einer am Stiel 33 vorgesehenen Bohrung 34 auf einen Lagerbolzen 35 drehbar gesteckt, dessen Achse 36 parallel zur Einfüllstutzenachse 37 außerhalb des lichten Querschnittes des Durchlasses 5 liegt und der mit einem unteren dem Einfüllstutzen 1 zugewandten Ende 38 in die Oberseite eines Trägerteils 39 des Verschlusses eingepreßt ist. Der Endbereich 84 des Stieles 33 bildet den Hebelarm 9 des Verschlußdeckels 8.

Am oberen Ende 40 ist der Lagerbolzen 35 in einer koaxialen Bohrung 41 gehalten, die in einer quer zur Einfüllstutzenachse 37 und oberhalb des Deckels 8 verlaufenden Stirnseite 42 eines das Trägerteil 39 koaxial umgebenden, ringförmigen Führungsgehäuses 43 vorgesehen ist. Die Stirnseite 42 bildet mit dem Rand 44 ihrer zentralen Durchlaßöffnung 45 eine zentrierende Führung für ein Absaugrohr 46 einer Zapfpistole 47. Am einfüllstutzennahen Ende 48 ist das Führungsgehäuse 43 am Trägerteil 39 umfänglich befestigt.

Auf den Lagerbolzen 35 ist ebenso wie der Deckel 8 ein Zahnrad 49 mit einer zentrischen Bohrung 50 oder ein dem Durchlaß 5 zugewandtes Zahnsegment drehbar gesteckt. Das Zahnrad 49 ist oberseitig auf dem Stiel 33 des Deckels 8 angebracht, wobei das Zahnrad 49 als Mitnahmeelement für die Verschwenkbewegung des Verschlußdeckels 8 dient. Der Lagerbolzen 35 ist von einer Schraubenfeder 51 koaxial umgeben, die sich einerseits an der dem Deckel 8 abgewandten Oberseite 52 des Zahnrades 49 und andererseits an der dem Zahnrad 49 zugewandten Unterseite 53 der Stirnseite 42 abstützt und den Deckel 8 auf eine den Durchlaß 5 des Trägerteils 39 umgebenden ringförmigen Flachdichtung 54 abdichtend drückt. Zur verbesserten Abdichtung weist der Deckel 8 dort eine unterseitig abstehende umlaufende Dichtkante 55 auf, die auf der Flachdichtung 54 aufliegt.

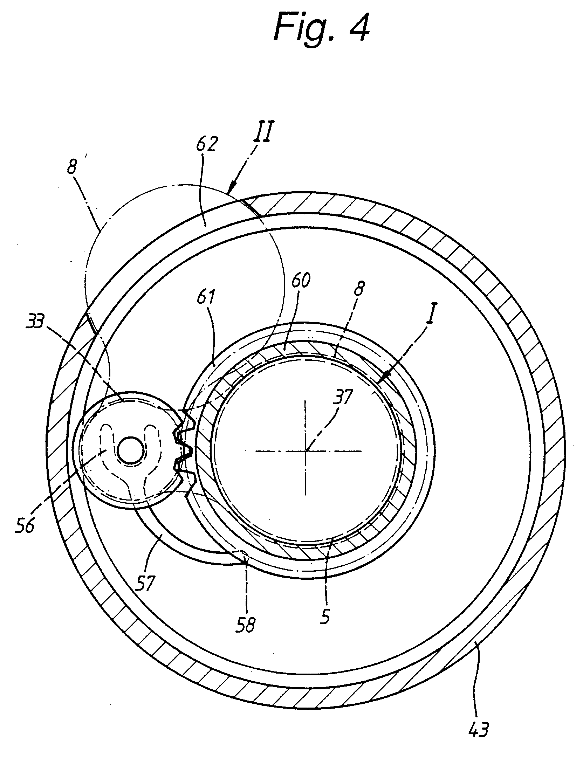

Zwischen dem Stiel 33 des Verschlußdeckels 8 und dem Trägerteil 39 ist ein gabelförmiges Ende 56 einer aus Fig. 4 ersichtlichen Wippe 57 eingeklemmt, das auf den Lagerbolzen 35 geschoben ist. Die Wippe besitzt eine Auflagestelle für ihre Kippachse am Trägerteil 39 und erstreckt sich am Stiel 33 vorbei und aus dessen Schwenkbereich heraus, wobei die Achse 36 des Lagerbolzens 35 die Schwenkachse des Verschlußdeckels 8 bildet. Das freistehende Ende 58 der Wippe 57 ragt dabei über den Verschlußdeckel 8 hinaus und in den von der Wandung 59 des Absaugrohres 46 im Führungsgehäuse 43 durchsetzbaren Raum hinein.

Zur Öffnung des Verschlußdeckels 8 und damit zur Betankung wird die Zapfpistole 47 mit ihrem Absaugrohr 46 durch die vom Rand 44 der Führungsgehäusestirnseite 42 gebildete Führung exakt koaxial zur Einfüllstutzenachse 37 dem Durchlaß 5 zugeführt. Das untere Ende 60 des Absaugrohres 46 ist als Verstellring 12 ausgebildet, der an seinem Umfang eine Verzahnung 61 aufweist, die in der Endstellung des Absaugrohres in die Verzahnung 89 des Zahnrades 49 bzw. des Zahnsegmentes gegenformschlüssig zu dieser eingreift. Gleichzeitig drückt das Absaugrohr 46 mit der Stoßkante 90 seines Endes 60 das freistehende Ende 58 der Wippe 57 hinunter, wodurch dessen gabelförmiges Ende 56 entgegen der Federkraft der Schraubenfeder 51 angehoben wird.

Mit dem Wippenende 56 wird gemeinsam der dieses über seinen Stiel 33 beaufschlagende Deckel 8 und das Zahnrad 49 beispielsweise um etwa 1 mm angehoben. Dadurch wird verhindert, daß die Flachdichtung 54, auf der der Deckel 8 in Schließstellung liegt, beim späteren Verschwenken des Deckels 8 beschädigt wird. Es ist allerdings auch denkbar, anstelle der Wippe 57 oberseitig im Trägerteil 39 unterhalb des Stieles 33 des Deckels 8 eine drehbar gelagerte Kugel anzuordnen, die in Schließstellung in eine entsprechend am Stiel 33 unterseitig ausgeformte Ausnehmung einrastet und über die nach Ausrasten aus der Ausnehmung der Deckel 8 beim Verschwenken in Öffnungsrichtung angehoben wird. Desweiteren kann anstatt der Kugel auch das Trägerteil 39 unterhalb des Stieles 33 rampenförmig ausgebildet sein, wodurch der Deckel 8 beim Verschwenken in Öffnungsrichtung ebenfalls angehoben werden kann.

Nun wird durch eine im Uhrzeigersinn verlaufende Teildrehung des Absaugrohres 46 um seine körpereigene Achse über den Verstellring 12 das Zahnrad 49 gegensinnig gedreht und der mit diesem fest verbundene Deckel 8 von einer Schließstellung I in eine den Durchlaß 5 vollständig freigebende Öffnungsstellung II um die Achse 36 des Lagerbolzens 35 seitlich verschwenkt.

Um eine freie Verschwenkbarkeit des Deckels 8 zu gewährleisten, weist dabei das Führungsgehäuse 43 einen Schlitz 62 auf, durch den der Deckel 8 in seiner Öffnungsstellung II hindurchragt. Der Schlitz 62 kann im übrigen von einer am Führungsgehäuse 43 befestigbaren elastischen Dichtlippe abgedeckt sein.

Zur möglichst schnellen Betätigung des Deckels 8 zwischen der Öffnungstellung II und der Schließstellung I ist vorgesehen, daß die Schwenkachse 36 von der Einfüllstutzen- und damit Durchlaßachse 37 einen möglichst großen Abstand aufweist. Dadurch wird der Schwenkwinkel zwischen den beiden Stellungen I und II verringert, wonach zur Verschwenkung des Deckels 8 das Absaugrohr 46 um einen kleineren Drehwinkel gedreht werden muß.

Das Füllrohr 63 der Zapfpistole 47 kann nun durch den Durchlaß 5 in den Einfüllstutzen 1 eingeführt werden.

Nach Beendigung des Tankens wird das Füllrohr 63 der robrotergeführten Zapfpistole 47 aus dem Einfüllstutzen 1 Zurückgezogen und dann zum Schließen des Deckels 8 das Absaugrohr 46 entgegen dem Uhrzeigersinn gedreht, wobei der Deckel 8 über das Zahnrad 49 in die Schließstellung I verschwenkt wird. Schließlich wird das Absaugrohr 46 aus dem Führungsgehäuse 43 gezogen, wodurch das Ende 58 der Wippe 57 entlastet wird. Der Deckel 8 senkt sich auf die Dichtung 54 ab und wird auf dieser durch die Federkraft der Schraubenfeder 51 dichtend angepreßt. Dabei wird durch eine drehwinkelüberwachende Steuerung am Roboter überprüft, ob der Deckel 8 verschlossen ist.

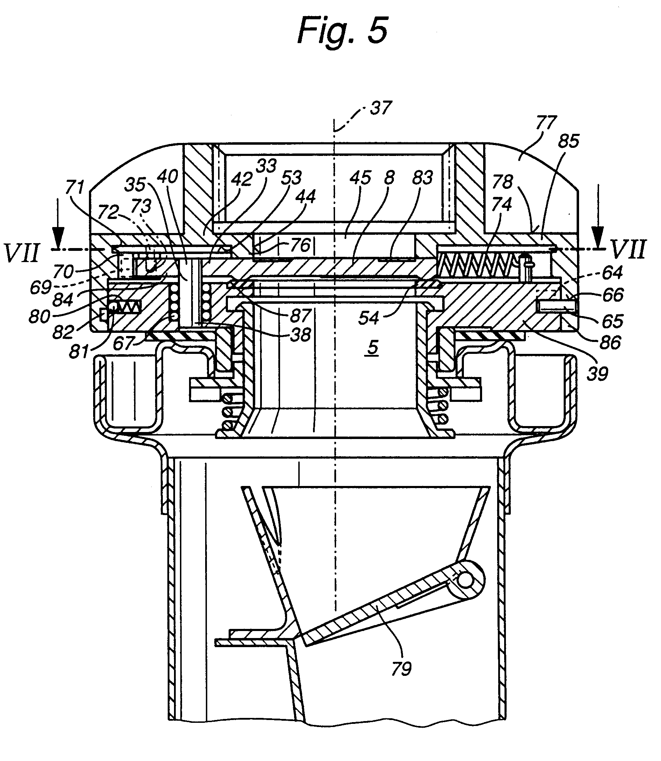

Eine Variante zum Ausführungsbeispiel aus Fig. 3 und 4 zeigt Fig. 5 bis 7. Dabei der Verstellring 85 als Führungsgehäuse nach Art einer Überwurfmutter ausgebildet. Der Verstellring 85 umgibt zwar das Trägerteil 39 koaxial, ist jedoch an seinem unteren Ende 86 nicht an diesem befestigt. Vielmehr weist das ringförmige Trägerteil 39 an seinem Außenumfang ein selbsthemmendes Schraubgewinde 64 auf, in dessen Gewindegang drei Stifte 65 - jeweils um 120° versetzt - (hier nur ein Stift dargestellt) eingreifen, die in im Bereich des Endes 86 des Verstellringes 85 entsprechend vorgesehene, radial durchgehende Bohrungen 66 eingepreßt sind, wodurch der Verstellring 85 am Trägerteil 39 gehalten und gleichzeitig durch den Versatz der drei Stifte 65 verkantungssicher schraubbar geführt ist. Das Schraubgewinde 64 kann auch am Innenumfang des Verstellringes 85 und die Stifte 65 am Außenumfang des Trägerteiles 39 angeordnet sein.

Der Lagerbolzen 35 ist am unteren Ende 38 in einer im Trägerteil 39 angeordneten Kugelbüchse 67 drehbar gelagert und am oberen über die Trägerteiloberfläche hinaus freistehende Ende 40 drehfest mit dem Verschlußdeckel 8 verbunden. Denkbar ist ebenso, daß der Lagerbolzen 35 mit seinem unteren Ende 38 im Trägerteil 39 eingepreßt und der Verschlußdeckel 8 um das obere Ende 40 drehbar angeordnet ist. Dabei ist es für eine verklemmfreie Verschwenkung unbedingt erforderlich, daß der Deckel 8 in Öffnungsstellung mit seinem dem Durchlaß 5 zugewandten Rand 68 gerade noch auf der Flachdichtung 54 aufliegt. Auch ist es denkbar, den Verschlußdeckel 8 über diese Stellung hinaus verschwenken. Der Deckel 8 fällt dann in Offenstellung II auf das Trägerteil 39. Um ein Verklemmen des Deckels an der Dichtung 54 bei einer Zurückschwenkung in die Schließstellung I zu vermeiden, ist am Außenumfang der Dichtung eine Fase 87 angeschnitten, über die der Deckel 8 auf die Dichtung gleiten kann.

Der Stiel 33 des Deckels 8 weist nun an seinem Umfang ein das Mitnahmeelement darstellendes Zahnsegment 69 auf, das in ein diesem gegenüberliegende entsprechend als Gegenformschlußelement ausgebildetes Zahnsegment 70 eines Hohlzahnrades formschlüssig eingreift, die an einer Innenseite 71 des Verstellringes 85 angeordnet ist und das Gegenstück zum Mitnahmeelement bildet. Das Zahnrad 49 des vorangegangen beschriebenene Ausführungsbeispiels kann dadurch entfallen. Alternativ zu den ineinandergreifenden Zahnsegmente 69 und 70 kann zur formschlüssigen Verbindung zwischen dem Verstellring 85 und dem Verschlußdeckel 8 beispielsweise an der Unterseite 53 der Verstellringstirnseite 42 ein Zapfen 72 befestigt sein, der zum Verschlußdeckel 8 hin abragt und in einen am Stiel 33 im Bereich des Hebelarmes 84 angeordneten Schlitz 73 eingreift, dessen Breite etwa dem Durchmesser des Zapfens 72 entspricht. Im kinematischen Kehrschluß kann der Schlitz 73 am Verstellring 85 und der Zapfen 72 oberseitig am Verschlußdeckel 8 angeordnet sein.

Desweiteren sind innerhalb des Verstellringes 43 zwei zur Einfüllstutzenachse 37 diametral gegenüberliegende Zugfedern 74,75 vorgesehen, die einerseits an der Innenseite 71 des Verstellringes 85 und andererseits am Trägerteil 39 befestigt sind. Der Rand 44 der Stirnseite 42 des Verstellringes 85 weist einen zum Verschlußdeckel 8 hin axial abstehenden Bund 76 auf, der, wie in Fig. 5 gezeigt, diesen in Schließstellung I auf die Flachdichtung 54 preßt.

Zum Betanken greift ein hier nicht weiter dargestelltes Absaugrohr der Zapfpistole direkt an Formschlußelementen 77, wie beispielsweise Stegen an, die an der Oberseite 78 der Verstellringstirnseite 42 axial abstehend ausgebildet sind. Denkbar ist auch die Ausgestaltung des Außenumfanges des Verstellringes 85 als Vielkant oder mit einer Verzahnung, den bzw. in die das jeweils entsprechend ausgebildete Absaugrohr formschlüssig um- bzw. eingreift. Bei Drehung des Absaugrohres entgegen dem Uhrzeigersinn wird der Verstellring 85 über die Stifte 65 in einer Schraubenbewegung entlang des Außenumfanges des Trägerteiles 39 angehoben, wobei der Randabschnitt 76 der Verstellringstirnseite 42 vom Verschlußdeckel 8 entgegen der Rückstellkraft der sich in Schließrichtung spannenden Zugfedern 74,75 abhebt. Somit entfällt auch die Notwendigkeit einer Wippe 57.

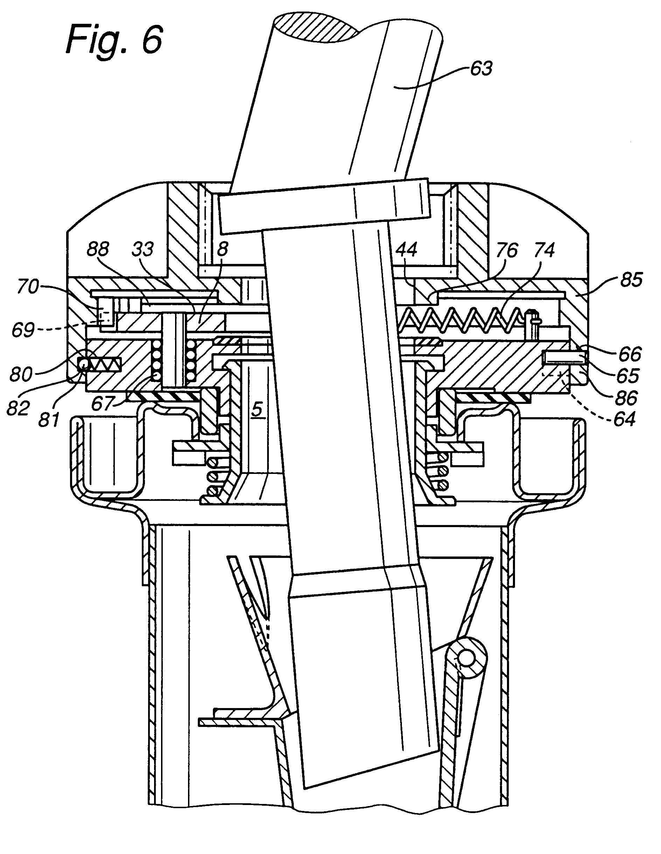

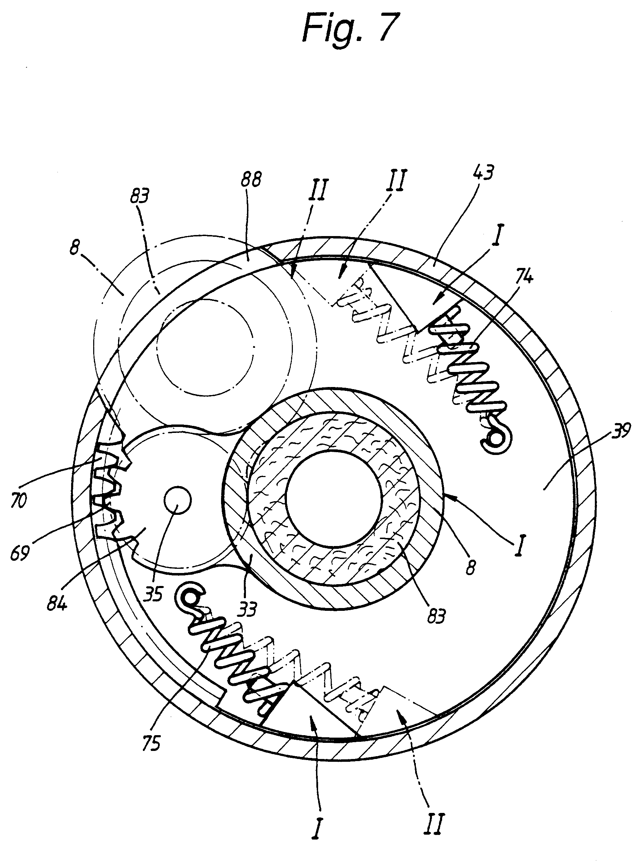

Gleichzeitig oder bei Spiel zwischen den ineinandergreifenden Verzahnungen 69,70 kurz dannach wird der Deckel 8 aufgrund des Eingriffes der Verzahnungen 69,70 des Verstellringes 85 und des Deckels 8 ineinander in dessen Auflageebene in die Öffnungsstellung II, wie aus Fig. 6 und 7 zu entnehmen ist, gleichsinnig mit der Drehbewegung des Absaugrohres verschwenkt. Der Dekkel 8 durchragt dabei mit einem Abschnitt einen am Außenumfang des Verstellringes ausgebildeten Schlitz 88.

Dannach wird das Füllrohr 63 durch den Verstellring 85 und den Durchlaß 5 hindurch in den Einfüllstutzen 1 eingeführt und durchstößt eine dort angeordnete Bleifreiklappe 79. Ebenfalls wie beim vorigen Ausführungsbeispiel ist es für ein schnelles Verschwenken günstig, die Drehachse 36 möglichst weit von der Einfüllstutzenachse 37 entfernt anzuordnen, wobei kleinere Verschwenkwinkel erzielt werden. Zur leichteren Betätigung des Deckels 8 mit geringerem Kraftaufwand, insbesondere bei einer manuellen Betankung, ist es desweiteren von Vorteil, den Hebelarm 84 möglichst lang bei gleichbleibender Länge des Gegenhebelarmes zu gestalten.

Zur manuellen Betankung weist das Trägerteil 39 an seinem Umfang eine oder mehrere Ausnehmungen 80 auf, in dem Rastelemente 81 in Form von federbelasteten Kugeln aufgenommen sind. Der Verstellring 85 weist an seinem dem Außenumfang des Trägerteils 39 zugekehrten Innenumfang im Bereich des Endes 48 Rastnuten 82 auf, in die die Kugeln bei Erreichen der Öffnungsstellung II des Deckels 8 einrasten. Durch die Rastverbindung wird der Verstellring 85 und der Deckel 8 in Öffnungsstellung II gehalten und somit eine manuelle Betankung ohne Handhabungsschwierigkeiten ermöglicht.

Nach Betankung wird zuerst das Füllrohr 63 zurückgezogen und dann der Verstellring 85 durch eine kurze Drehung des Absaugrohres in Uhrzeigersinn gedreht, wobei die Rastelemente 81 weggedrückt werden. Das Absaugrohr kann dannach vom Verstellring 85 abgezogen werden, wonach dieser und der Verschlußdeckel 8 durch die Rückstellkraft der als Rückstellfedern wirkenden Zugfedern 74,75 in die Schließstellung I gebracht werden. Dabei wird der Verstellring 85 so weit abgesenkt, daß der Deckel 8 dichtend auf die Flachdichtung 54 gepreßt wird.

Es sei schließlich noch angemerkt, daß am Verschlußdeckel 8 oberseitig im den Durchlaß 5 abdeckenden Bereich eine kreisringförmige Reflektionsfolie 83 angeordnet ist, über die der Roboter mittels einer optischen Sensorik die momentane Lage des Verschlußdeckels 8 überprüfen und steuern kann und über die die Zapfpistole 47 zur Betankung an den Einfüllstutzen 1 herangeführt werden kann.

## Patentansprüche

1. Verschluß für einen Einfüllstutzen (1) mit einem an der Oberseite schwenkbar gelagerten durch Krafteinwirkung auf einen Hebelarm (9) aus der Schließstellung öffenbaren Verschlußdeckel (8), dessen Schwenkachse (7) am Rand des Einfüllstutzens (1) außerhalb des lichten Querschnittes des Durchlasses (5) des Einfüllstutzens (1) angeordnet ist und der ein mit dem Hebelarm (9) zusammenwirkendes Mitnahmelement zur Einleitung einer Schwenkbewegung des Verschlußdeckels (8) aufweist, wobei die Schwenkbewegung von einem konzentrisch zum Einfüllstutzen (1) gelagerten Verstellring (12) aus mittels eines mit dem Mitnahmeelement formschlüssig verbundenen Gegenformschlußelementes einleitbar ist,
**dadurch gekennzeichnet,**
daß zur Bildung des Verschlusses eines Kraftstofftankes der axial zugängliche Verstellring (12) unterhalb des Verschlußdeckels (8) auf einem Trägerteil (2) drehbar angeordnet ist und an seiner Oberseite zumindest in einem Teilbereich eine das Gegenformschlußelement bildende Spiralverzahnung (13) aufweist, mit der Zähne (11) eines das Mitnahmeelement bildenden, am Hebelarm (9) des Verschlußdeckels (8) angeordneten Zahnsegmentes (10) derart in Eingriff stehen, daß durch eine Drehung des Verstellringes (12) eine in öffnendem oder schließendem Sinn wirkende Kraft auf den Verschlußdeckel (8) um dessen in quer zur Einfüllstutzenachse liegenden Schwenkachse (7) in der Weise ausübbar ist, daß der Verschlußdeckel (8) aus der Schließlage heraus nach oben schwenkt.

2. Verschluß für einen Einfüllstutzen (1) mit einem an der Oberseite schwenkbar gelagerten, durch Krafteinwirkung auf einen Hebelarm (84) aus der Schließstellung öffenbaren Verschlußdeckel (8), dessen Schwenkachse (36) am Rand und parallel zur Achse (37) des Einfüllstutzens (1) außerhalb des lichten Querschnittes des Durchlasses (5) des Einfüllstutzens (1) angeordnet ist und der ein mit dem Hebelarm (84) zusammenwirkendes Mitnahmelement (49,69,73) zur Einleitung einer seitlichen Schwenkbewegung des Verschlußdeckels (8) aufweist, wobei die Schwenkbewegung von einem konzentrisch zum Einfüllstutzen (1) gelagerten Verstellring (60,85) aus mittels eines mit dem Mitnahmeelement (49,69,73) formschlüssig verbundenen Gegenformschlußelementes (61,70,72) einleitbar ist,
**dadurch gekennzeichnet,**
daß zur Bildung des Verschlusses eines Kraftstofftankes das Mitnahmeelement (49,69,73) nahe der Schwenkachse (36) an einem - vom Durchlaß (5) aus gesehen - jenseits der Schwenkachse (36) angeordneten Hebelarm (84) angeordnet ist.

3. Verschluß nach Anspruch 1,
**dadurch gekennzeichnet,**
daß der Verschluß eine schwenkbare im Schließsinne durch Federkraft vorgespannte Sperrklinke (17) zur Ver- und Entriegelung des Verschlußdeckels (8) aufweist, die einen nach außen sich erstreckendem Hebelarm (19) zum mechanischen Lüften der Sperrklinke (17) entgegen der Federkraft besitzt.

4. Verschluß nach Anspruch 3,
**dadurch gekennzeichnet,**
daß die Schwenklagerung (16) für die Sperrklinke (17) am Verstellring (12) angeordnet ist, wobei im Verstellring (12) eine radiale Ausnehmung (18) zur freien Schwenkbarkeit der Sperrklinke (17) vorgesehen ist.

5. Verschluß nach Anspruch 3,
**dadurch gekennzeichnet,**
daß die die Sperrklinke (17) im Schließsinne vorspannende als Schraubendruckfeder gestaltete Feder (20) in einer am Verstellring (12) ausgebildeten zum darüberliegenden Hebelarm (19) der Sperrklinke (17) hin offenen axialen Aussparung (21) aufgenommen ist und sich am Hebelarm (19) einerseits und am Grund (22) der Aussparung (21) andererseits abstützt.

6. Verschluß nach Anspruch 1,
**dadurch gekennzeichnet,**
daß am Umfang des Einfüllstutzens (1) eine im Querschnitt trapezförmige und sich radial nach außen öffnende als Rastnut für den Füllkopf einer Zapfpistole (28) dienende Umfangsnut (23) vorgesehen ist, deren dem Tank näher gelegene untere Flanke (24) am Verstellring (12) und deren gegenüberliegende obere Flanke (25) vom Einfüllstutzen (1) gebildet ist.

7. Verschluß nach Anspruch 1,
**dadurch gekennzeichnet,**
daß die Spiralverzahnung (13) am Verstellring (12) und die Gegenverzahnung am Hebelarm (9) des Verschlußdeckels (8) hinsichtlich der Steilheit der Spiralkontur derart ausgebildet sind, daß das darin gebildete Getriebe in beiden Kraftflußrichtungen betätigbar ist.

8. Verschluß nach einem der Ansprüche 1 oder 2,
**dadurch gekennzeichnet,**
daß im Durchlaßbereich am Verschlußdeckel (8) oberseitig zumindest eine Markierung (83) angeordnet ist, mittels der eine Zapfpistole (47) robotergesteuert über eine Sensorik an den Einfüllstutzen (1) zur Betankung heranführbar ist.

9. Verschluß nach Anspruch 2,
**dadurch gekennzeichnet,**
daß der Verschluß eine Vorrichtung beinhaltet, mittels der zum Öffnen noch in Schließstellung (I) des Verschlußdeckels (8) dessen Anpressung an eine den Durchlaß (5) umgebende Dichtung (54) zumindest aufhebbar ist.

10. Verschluß nach Anspruch 9,
**dadurch gekennzeichnet,**
daß die Vorrichtung von einer Wippe (57) gebildet ist, die den Verschlußdeckel (8) im Bereich seiner Schwenkachse (36) mit einem Ende (56) untergreift und am anderen Ende (58) von einer Zapfpistole (47) in der Ankopplungsbewegung an den Einfüllstutzen (1) betätigbar ist.

11. Verschluß nach Anspruch 2,
**dadurch gekennzeichnet,**
daß die Schwenkachse (36) des Verschlußdeckels (8) die Achse eines Lagerbolzens (35) ist, auf dem der Deckel (8) mit einem an ihm angeformten Stiel (33) drehbar aufgesteckt oder befestigt ist und der in einem an den Einfüllstutzen (1) angekoppelten Trägerteil (39) aufgenommen ist.

12. Verschluß nach Anspruch 11,
**dadurch gekennzeichnet,**
daß der Verstellring (85) gehäuseartig den Verschluß umgibt, dessen Trägerteil (39) am Außenumfang ein Gewinde (64) aufweist, an dem der Verstellring (85) entlang der Einfüllstutzenachse (37) schraubbar gehalten ist, wobei der Deckel (8) über den Verstellring (85) nach Art einer Überwurfmutter und einen abstehenden Bund (76) in Schließstellung (I) an die Dichtung (54) anpreßbar ist.

13. Verschluß nach Anspruch 12,
**dadurch gekennzeichnet,**
daß die Gewindesteigung des Gewindes (64) für den Verstellring (85) ungleichmäßig mit einer kleinen Rampe ausgebildet und durch eine Nut dargestellt ist, in die ein Stift (65) eingreift.

14. Verschluß nach Anspruch 12,
**dadurch gekennzeichnet,**
daß das Mitnahmeelement ein Zahnsegment (69) ist, das am Außenumfang des Stieles (33) des Verschlußdeckels (8) ausgebildet ist, und daß das Gegenformschlußelement ein am Innenumfang des Verstellringes (85) ausgebildetes Zahnsegment (70) eines Hohlzahnrades ist.

15. Verschluß nach Anspruch 12,
**dadurch gekennzeichnet,**
daß die Paarung der Mitnahmeelemente durch einen radialen Schlitz (73) am einen Partner, vorzugsweise am Stiel (33) des Verschlußdeckels (8) und an dem anderen Partner - als Gegenformschlußelement - durch einen Zapfen (72) gebildet ist.

16. Verschluß nach Anspruch 12,
**dadurch gekennzeichnet,**
daß im Außenumfang des Trägerteils (39) zumindest ein vorgespanntes Rastelement (81) angeordnet ist, das in Offenstellung (II) des Verschlußdeckels (8) in eine am Innenumfang des Verstellringes (85) vorgesehene Rastnut (82) einrastbar ist.

17. Verschluß nach Anspruch 12,
**dadurch gekennzeichnet,**
daß innerhalb des Verstellringes (85) mindestens eine als Rückstellfeder wirkende, den Verstellring (85) in Schließrichtung spannende Zugfeder (74,75) angeordnet ist, die an dessen Innenumfang einerseits und am Trägerteil (39) andererseits befestigt ist.

18. Verschluß nach Anspruch 12,
**dadurch gekennzeichnet,**
daß der Verstellring (85) außenseitig weitere Formschlußelemente (77) trägt, die mit der Zapfpistole (47) derart formschlüssig verbindbar sind, daß durch eine Drehbewegung der Zapfpistole (47) eine Verschwenkung des Deckels (8) einleitbar ist.

19. Verschluß nach Anspruch 12,
**dadurch gekennzeichnet,**
daß der Verstellring (85) einen am Außenumfang verlaufenden, vom Verschlußdeckel (8) zur Einnahme der Offenstellung (II) durchragbaren Schlitz (88) aufweist.

20. Verschluß nach Anspruch 11,
**dadurch gekennzeichnet,**
daß konzentrisch zur Schwenkachse (36) oberseitig auf dem Stiel (33) des Deckels (8) ein Zahnrad (49) oder Zahnsegment angebracht ist, das das Mitnahmeelement des Deckels (8) zu dessen Verschwenkung bildet, und daß der Verstellring (12) von einem einfüllseitigen Ende (60) eines Absaugrohres (46) einer Zapfpistole (47) gebildet ist, an dessen Außenumfang eine Verzahnung (61) angeordnet ist, die das Gegenformschlußelement zum Zahnsegment bildet, wobei im Eingriff der formschlüssigen Elemente (61,49) durch Drehen des Absaugrohres (46) eine Verschwenkung des Verschlußdeckels (8) einleitbar ist, wobei in der Stirnseite (42) des Führungsgehäuses (43) eine Durchführungsöffnung (45) angeordnet ist, die das Absaugrohr (46) der Zapfpistole (47) zentriert.

21. Verschluß nach Anspruch 20,
**dadurch gekennzeichnet,**
daß eine den Verschlußdeckel (8) auf die Dichtung (54) andrückende Schraubenfeder (51) etwa gleichachsig zur Schwenkachse (36) des Verschlußdeckels (8) angeordnet ist.

22. Verschluß nach Anspruch 21,
**dadurch gekennzeichnet,**
daß das Führungsgehäuse (43) einen am Außenumfang entlang verlaufenden Schlitz (62) aufweist, der vom Verschlußdeckel (8) zu Einnahme der Offenstellung (II) durchragbar ist.

## Claims

1. Closure for a filler inlet pipe (1) at the top of which is a swivelling closure cap (8) that can be opened from the closed position by the action of a force on a lever arm (9), the swivel axis (7) of the said cap being located at the edge of the filler inlet pipe (1) outside the cross-section of the lumen (5) of the filler inlet pipe (1) and which has a follower element cooperating with the lever arm (9) to initiate a swivelling movement of the cap (8), whereby the swivelling motion can be initiated by a displacement ring (12) mounted concentrically with the filler inlet pipe by means of a form-closing counter-element associated in a form-closing arrangement with the follower element, characterized in that to form the closure of a fuel tank the axially accessible displacement ring (12) is located rotatably on a carrier component (2) under the cap (8) and has on at least part of its upper side spiral gear teeth (13) that constitute the form-closing counter-element, with which the teeth (11) of a toothed segment (10) fitted on the lever arm (9) of the cap (8) and forming the follower element engage in such a way that, by rotation of the displacement ring (12), a force acting to open or close the cap (8) is exerted on the latter so that the cap (8) can swivel outwards and upwards from the closed position about its swivel axis (7) transverse to the axis of the filling inlet pipe.

2. Closure for a filler inlet pipe (1) at the top of which is a swivelling closure cap (8) that can be opened from the closed position by the action of a force on a lever arm (84), the swivel axis (36) of the said cap being located at the edge and parallel to the axis (37) of the filler inlet pipe (1) outside the cross-section of the lumen (5) of the filler inlet pipe (1) and which has a follower element (49, 69, 73) cooperating with the lever arm (84) to initiate a sideways swivelling movement of the cap (8), whereby the swivelling motion can be initiated by a displacement ring (60, 85) mounted concentrically with the filler inlet pipe (1) by means of a form-closing counter-element (61, 70, 72) associated in a form-closing arrangement with the follower element (49, 69, 73), characterized in that to form the closure of a fuel tank the follower element (49, 69, 73) is located close to the swivel axis (36) on a lever arm (84) arranged opposite the swivel axis (36) - as seen from the lumen (5).

3. Closure according to Claim 1, characterized in that the closure comprises a swivelling detent (17) that is held closed by spring pressure to lock and unlock the closure cap (8), possessing a lever arm (19) that extends outwards to allow mechanical lifting of the detent (17) against the force of the spring.

4. Closure according to Claim 3, characterized in that the swivel bearing (16) for the detent (17) is located on the displacement ring (12), whereby a radial recess (18) is formed in the displacement ring (12) to permit free swivelling of the detent (17).

5. Closure according to Claim 3, characterized in that the spiral compression spring (20) holding the detent (17) closed is fitted in an axial recess (21) formed in the displacement ring (12) and opening towards the lever arm (19) of the detent (17) above it, and rests at one end against the lever arm (19) and at the other end against the bottom (22) of the said recess (21).

6. Closure according to Claim 1, characterized in that around the circumference of the filler inlet pipe (1) there is a cross-sectionally trapezoidal circumferential groove (23) opening radially outwards and serving as a rest for the filler head of a petrol-pump dispenser nozzle (28), whose lower flank (24) nearest to the tank is formed by the displacement ring (12) and whose opposing upper flank (25) is formed by the filler inlet pipe (1).

7. Closure according to Claim 1, characterized in that the spiral gear-teeth (13) on the displacement ring (12) and the engaging teeth on the lever arm (9) of the cap (8) are so shaped in relation to the steepness of the spiral contour, that the gear system formed between them can be activated in both force flow directions.

8. Closure according to either of Claims 1 or 2, characterized in that in the aperture area on the top of the cap (8), at least one mark (83) is arranged such that a pump dispenser nozzle (47) can be introduced into the filler inlet (1) under robot control via a sensor system to fill the tank.

9. Closure according to Claim 2, characterized in that the closure comprises a device whereby, to open the cap (8) while still in the closed position (I), its pressure against a sealing gasket (54) surrounding the aperture (5) can at least be released.

10. Closure according to Claim 9, characterized in that the said device consists of a rocker arm (57) one end (56) of which engages with the cap (8) in the area of its swivel axis (36) and the other end (58) is activated by a pump dispenser nozzle (47) during the coupling movement of the latter into the filler inlet pipe (1).

11. Closure according to Claim 2, characterized in that the swivel axis (36) of the cap (8) is the axis of a bearing pin (35) onto which the cap (8) is rotatably pushed or attached by means of a stud (33) formed on it, and which is held by a carrier component (39) coupled to the filler inlet pipe (1).

12. Closure according to Claim 11, characterized in that the displacement ring (85) surrounds the closure like a housing, whose carrier component (39) has a thread (64) on its outer circumference onto which the displacement ring (85) can be screwed along the axis of the filler inlet pipe (37), whereby the cap (8) can be pressed against the gasket (54) by the displacement ring (85) in the manner of a sleeve nut and a spreading collar.

13. Closure according to Claim 12, characterized in that the pitch of the thread (64) for the displacement ring (85) is formed non-uniformly with a small slope and is constructed with a groove in which a pin (65) engages.

14. Closure according to Claim 12, characterized in that the follower element is a toothed segment (69) formed on the outer circumference of the stud (33) of the cap (8), and that the form-closing counter-element is a toothed segment (70) of a hollow toothed wheel on the inner circumference of the displacement ring (85).

15. Closure according to Claim 12, characterized in that the coupling of the follower element is formed through a radial slit (73) to one partner, preferably the stud (33) of the cap (8) and to the other partner - as a form-closing counter-element - by a pin (72).

16. Closure according to Claim 12, characterized in that on the outer circumference of the carrier component (39) there is at least one spring-loaded locking element (81) which, in the open position (II) of the cap (8), springs into a locking groove (82) on the inner circumference of the displacement ring (85).

17. Closure according to Claim 12, characterized in that inside the displacement ring (85) there is at least one tension spring (74, 75) acting as a return spring which tends to pull the displacement ring (85) in the closed direction, the said spring being attached at one end to the ring's inner circumference and at the other end to the carrier component (39).

18. Closure according to Claim 12, characterized in that the displacement ring (85) has on the outside further form-closing elements (77), which connect to the pump dispenser nozzle (47) in such a way that rotation of the nozzle (47) will cause the cap (8) to swivel.

19. Closure according to Claim 12, characterized in that the displacement ring (85) has a slot (88) at its outer circumference, through which the cap (8) can project to assume the open position (II).

20. Closure according to Claim 11, characterized in that concentric to the swivel axis (36) and at the top of the stud (33) of the cap (8), there is a toothed wheel (49) or segment which forms the follower element of the cap (8) for its swivelling motion, and that the displacement ring (12) is formed by the filling end (60) of the suction pipe (46) of a pump dispenser nozzle (47), at whose outer circumference teeth (61) are arranged which form the form-closing counter-element of the toothed segment, whereby when the form-closing elements (61, 49) are brought into engagement by rotating the suction pipe (46) the cap (8) is swivelled aside, and at the top end (42) of the guide housing (43) there is a through-opening (45) which centres the suction pipe (46) of the pump dispenser nozzle (47).

21. Closure according to Claim 20, characterized in that a spiral spring (51) pressing the cap (8) down onto the gasket (54) is approximately coaxial with the swivelling axis (36) of the cap (8).

22. Closure according to Claim 21, characterized in that the guide housing (43) has a slot (62) along its outer circumference, through which the cap (8) can project when it moves to the open position (II).

## Revendications

1. Fermeture pour un tuyau de remplissage (1) comprenant un bouchon de fermeture (8) monté de façon à pouvoir pivoter, au niveau de la partie supérieure, et pouvant être ouvert à partir de la position de fermeture par action de force sur un bras de levier (9), bouchon de fermeture dont l'axe de pivotement (7) est disposé au bord du tuyau de remplissage (1), à l'extérieur de la section intérieure du passage (5) du tuyau de remplissage (1), et qui présente un élément d'entraînement coopérant avec le bras de levier (9) pour déclencher un mouvement de pivotement du bouchon de fermeture (8), de sorte que le mouvement de pivotement d'un anneau de réglage (12) logé concentriquement par rapport au tuyau de remplissage (1) peut être lié au moyen d'un contre-élément assemblé par sûreté de forme à l'élément d'entraînement,
caractérisée
en ce que, pour former la fermeture d'un réservoir de carburant, l'anneau de réglage (12) accessible axialement est disposé au-dessous du bouchon de fermeture (8), sur une partie support (2), de manière à pouvoir pivoter, et présente, au niveau de sa partie supérieure, au moins sur une partie de la pièce, une denture hélicoïdale (13) formant le contre-élément et avec laquelle des dents (11) d'un segment denté (10) disposé sur le bras de levier (9) du bouchon de fermeture (8) et formant l'élément d'entraînement viennent en prise de façon telle que, sous l'effet d'une rotation de l'anneau de réglage (12), une force, s'exerçant dans le sens de l'ouverture ou de la fermeture, puisse être exercée sur le bouchon de fermeture (8), autour de son axe de pivotement (7) positionné de façon transversale par rapport à l'axe du tuyau de remplissage, de manière telle que le bouchon de fermeture (8) pivote vers le haut à partir de la position de fermeture.

2. Fermeture pour un tuyau de remplissage (1) comprenant un bouchon de fermeture (8) monté de façon à pouvoir pivoter, au niveau de la partie supérieure, et pouvant être ouvert à partir de la position de fermeture par action de force sur un bras de levier (84), bouchon de fermeture dont l'axe de pivotement (36) est disposé au bord et parallèle à l'axe (37) du tuyau de remplissage (1), à l'extérieur de la section intérieure du passage (5) du tuyau de remplissage (1), et qui présente un élément d'entraînement (49, 69, 73) coopérant avec le bras de levier (84) pour déclencher un mouvement de pivotement ou de basculement latéral du bouchon de fermeture (8), de sorte que le mouvement de pivotement d'un anneau de réglage (60, 85) logé concentriquement par rapport au tuyau de remplissage (1) peut être déclenché au moyen d'un contre-élément à sûreté de forme (61, 70, 72) lié par sûreté de forme à l'élément d'entraînement (49, 69, 73),
caractérisée
en ce que pour former la fermeture d'un réservoir de carburant, l'élément d'entraînement (49, 69, 73) est disposé à proximité de l'axe de pivotement (36), sur un bras de levier (84) - vu depuis le passage (5) - disposé au-delà de l'axe de pivotement (36).

3. Fermeture selon la revendication 1, caractérisée en ce que la fermeture présente un cliquet d'arrêt (17) pouvant pivoter, précontraint dans le sens de la fermeture par une forme d'un ressort, pour verrouiller et déverrouiller le bouchon de fermeture (8), lequel cliquet d'arrêt est doté d'un bras de levier (19), s'étendant vers l'extérieur, servant à dégager mécaniquement le cliquet d'arrêt (17) à l'encontre de la force du ressort.

4. Fermeture selon la revendication 3, caractérisée en ce que le montage pivotant (16) pour le cliquet d'arrêt (17) est disposé sur l'anneau de réglage (12), une cavité (18) radiale étant prévue dans l'anneau de réglage (12) pour permettre au cliquet d'arrêt (17) de pivoter librement.

5. Fermeture selon la revendication 3, caractérisée en ce que le ressort (20), configuré comme un ressort hélicoïdal de compression, ayant une action de précontrainte sur le cliquet d'arrêt (17) dans le sens de la fermeture, est logé dans une encoche (21) axiale formée sur l'anneau de réglage (12), ouverte vers le bras de levier (19) sus-jacent du cliquet d'arrêt (17), et vient en appui, d'une part, sur le bras de levier (19) et, d'autre part, sur le fond (22) de l'encoche (21).

6. Fermeture selon la revendication 1, caractérisée en ce que, à la périphérie du tuyau de remplissage (1), il est prévu une rainure périphérique (23) de section trapézoïdale et s'ouvrant radialement vers l'extérieur, et servant de rainure d'arrêt pour la tête de remplissage d'un pistolet (28), rainure périphérique dont le flanc (24) inférieur placé le plus près du réservoir est formé sur l'anneau de réglage (12) et dont le flanc supérieur (25) opposé est formé par le tuyau de remplissage (1).

7. Fermeture selon la revendication 1, caractérisée en ce que la denture hélicoïdale (13), sur l'anneau de réglage (12), et la contre-denture sur le bras de levier (9) du bouchon de fermeture (8), concernant l'inclinaison du contour hélicoïdal, sont configurées de façon telle que l'engrenage formé à l'intérieur puisse être actionné dans les deux sens d'entraînement.

8. Fermeture selon la revendication 1 ou 2, caractérisée en ce qu'au moins un marquage (83) est repéré dans la zone de passage sur le bouchon de fermeture (8), sur le dessus, marquage au moyen duquel un pistolet (47) peut être rapproché du tuyau de remplissage (1) pour faire le plein de carburant de façon commandée par un robot, au moyen de capteurs.

9. Fermeture selon la revendication 2, caractérisée en ce que la fermeture comprend un dispositif au moyen duquel, pour ouvrir le bouchon de fermeture (8) se trouvant encore en position de fermeture (I), la pression de contact de celui-ci sur un joint (54) entourant le passage (5) peut être supprimée.

10. Fermeture selon la revendication 9, caractérisée en ce que le dispositif est constitué d'une bascule (57) qui saisit le bouchon de fermeture (8) par une extrémité (56), dans la zone de son axe de pivotement (36), et en ce que, par l'autre extrémité (58), la bascule peut être actionnée par un pistolet (47) lors du mouvement d'accouplement au tuyau de remplissage (1).

11. Fermeture selon la revendication 2, caractérisée en ce que l'axe de pivotement (36) du bouchon de fermeture (8) est l'axe d'un pivot (35) sur lequel le bouchon (8), par un appendice (33) fermé sur lui, est enfiché avec possibilité de rotation ou est fixé, et qui est logé dans une partie support (39) accouplée au tuyau de remplissage (1).

12. Fermeture selon la revendication 11, caractérisée en ce que l'anneau de réglage (85) entoure comme un boîtier la fermeture dont la partie support (39) présente un filetage (64) à sa périphérie extérieure, filetage sur lequel l'anneau de réglage (85) est maintenu de façon vissable le long de l'axe (37) du tuyau de remplissage, de sorte que le bouchon (8), par l'anneau de réglage (85), à la façon d'un écrou d'accouplement, et par un collet (76) en saillie, peut venir en appui de compression sur le joint (54) dans la position de fermeture (I).

13. Fermeture selon la revendication 12, caractérisée en ce que le pas de vis du filetage (64) pour l'anneau de réglage (85) est constitué de façon irrégulière avec une petite rampe et est représenté par une rainure dans laquelle pénètre une goupille (65).

14. Fermeture selon la revendication 12, caractérisée en ce que l'élément d'entraînement est un segment denté (69) formé à la périphérie extérieure de l'appendice (33) du bouchon de fermeture (8), et en ce que le contre-élément à sûreté de forme est un segment denté (70), d'une roue dentée creuse, formé à la périphérie intérieure de l'anneau de réglage (85).

15. Fermeture selon la revendication 12, caractérisée en ce que l'accouplement des éléments d'entraînement est formé par une fente radiale (73) au niveau d'un élément, de préférence au niveau de l'appendice (33) du bouchon de fermeture (8), et par un tenon (72) au niveau de l'autre élément servant de contre-élément à sûreté de forme.

16. Fermeture selon la revendication 12, caractérisée en ce que, dans la périphérie extérieure de la partie support (39), il est prévu au moins un élément d'arrêt (81) précontraint qui, dans la position d'ouverture (II) du bouchon de fermeture (8), peut s'encliqueter dans une rainure d'arrêt (82) prévue à la périphérie intérieure de l'anneau de réglage (85).

17. Fermeture selon la revendication 12, caractérisée en ce que, à l'intérieur de l'anneau de réglage (85), il est prévu au moins un ressort de traction (74, 75), fonctionnant comme un ressort de rappel, contraignant l'anneau de réglage (85) vers la position de fermeture, lequel ressort de traction est fixé, d'un côté, à la périphérie intérieure de l'anneau et, de l'autre côté, à la partie support (39).

18. Fermeture selon la revendication 12, caractérisée en ce que l'anneau de réglage (85) supporte à l'extérieur d'autres éléments (77) à sûreté de forme qui peuvent être assemblés par sûreté de forme avec le pistolet (47), de façon telle qu'un basculement du bouchon (8) puisse être provoqué par un mouvement pivotant du pistolet (47).

19. Fermeture selon la revendication 12, caractérisée en ce que l'anneau de réglage (85) présente une fente (88), s'étendant à sa périphérie extérieure et que le bouchon de fermeture (8) peut traverser en position ouverte (II).

20. Fermeture selon la revendication 11, caractérisée en ce qu'une roue dentée (49), ou un segment denté, est monté concentriquement par rapport à l'axe de pivotement (36) sur le dessus de l'appendice (33) du bouchon (8), laquelle roue dentée ou lequel segment denté constitue l'élément d'entraînement du bouchon (8) pour son basculement, et en ce que l'anneau de réglage (12) est formé par une extrémité (60), côté remplissage, d'un tuyau d'aspiration (46) d'un pistolet (47), extrémité dont la périphérie extérieure comporte une denture (61) constituant le contre-élément à sûreté de forme pour le segment denté, de sorte qu'un basculement du bouchon de fermeture (8) peut être effectué lorsque les éléments à sûreté de forme (61, 49) sont en prise, sous l'effet du mouvement pivotant du tuyau d'aspiration (46), une ouverture de passage (45) étant disposée sur le côté frontal (42) du boîtier de guidage (43), laquelle ouverture de passage centre le tuyau d'aspiration (46) du pistolet (47).

21. Fermeture selon la revendication 20, caractérisée en ce qu'un ressort hélicoïdal (51) est disposé sensiblement coaxialement à l'axe de pivotement (36) du bouchon de fermeture (8), lequel ressort hélicoïdal presse le bouchon de fermeture (8) sur le joint (54).

22. Fermeture selon la revendication 21, caractérisée en ce que le boîtier de guidage (43) présente une fente (62), s'étendant le long de la périphérie extérieure et que le bouchon de fermeture (8) peut traverser en position ouverte (II).
